# EUROPEAN PATENT APPLICATION

(11) **EP 2 851 810 A1**
(43) Date of publication of application: **25.03.2015**
(21) Application number: 13464012.7
(22) Date of filing: 24.09.2013
(51) Int. Cl.: G06F 17/30

(54) **Management of a memory**

(71) Applicant: Continental Automotive GmbH, 30165 Hannover (DE)
(72) Inventor: Furdui, Adrian-Remus, 307220 Timis (RO)

(57) **Abstract**

A method for managing a memory pool (12) in a memory heap (26) partitioned into consecutive memory segments (20) is proposed. The method comprises deleting a specific memory segment (20') by: receiving an identification key (32) for the specific memory segment (20'), determining a start address and a size of the specific memory segment (20') from a translation table (10) based on the identification key (32), and moving memory segments (20), which are allocated behind the start address of the specific memory segment (20') in the memory heap (26), towards the beginning of the memory heap (26) by the size of the specific memory segment (20'), such that the memory pool (12) consists of a first section (28), which is continuously allocated, and a second section (30), which is continuously unallocated.

## Description

### Field of the invention

The invention relates to a method, a computer program and a computer-readable medium for managing a memory pool.

### Background of the invention

In computer-based systems, such as for instance embedded systems, a method for manual memory management may be favored for allocating and deleting data. By manually managing the memory, usually fragmentation of the memory occurs by deletions, in which a user explicitly requests the deletion of a specific allocated memory segment.

Several techniques to reduce fragmentation have been developed, which are not capable of completely eliminating fragmentation if random-sized data are allocated to the memory. Moreover, solutions for automatic memory managers, such as for example garbage collection, as well as solutions to eliminate fragmentation for the allocation of data with fixed size have been developed. However, such solutions may have certain drawbacks and may not always be suitable, in particular for an application in embedded systems.

### Summary of the invention

It is an object of the invention to provide a method for managing a memory pool completely eliminating a fragmentation of the memory.

This object is achieved by the subject-matter of the independent claims. Further exemplary embodiments are evident from the dependant claims and from the following description. An aspect of the invention relates to a method for managing a memory pool of a memory heap partitioned into consecutive memory segments.

The term memory pool may be understood as a certain area of memory in the memory heap of any computer-based system, which certain area may comprise a part of or the entire memory heap. For a comprehensive management of the memory pool, the memory pool may have a known start address and a known size. Therein the size of the memory pool may be aligned with a size of a machine word of the respective computer-based system, i.e. the size may be a multiple of the machine-specific word size, such as e.g. a multiple of a 8, 16, 32, 64-bit word size, depending on an architecture of the machine. The memory heap may for instance be or comprise a part of a RAM, EPROM, or a FLASH memory.

The memory segments of the memory pool may be of varying and/or of equal size, wherein the size of each memory segment may be aligned with the machine word size. Each memory segment has a segment-specific start and end address in the memory pool, and a consecutive arrangement of the memory segments may mean that there are no gaps between two subsequent segments, i.e. there is no unallocated memory between two subsequent segments.

According to an embodiment of the invention, the method comprises deleting a specific memory segment by receiving an identification key for the specific memory segment, determining the start address and the size of the specific memory segment from a translation table based on the identification key, and moving memory segments, which are allocated behind the start address of the specific memory segment in the memory pool, towards the beginning of the memory pool by the size of the specific memory segment, such that the memory pool consists of a first section, which is continuously allocated, and a second section, which is continuously unallocated. In other words, upon a deletion of the specific data segment, all allocated memory segments having a start address, which is larger than that of the specific memory segment, are moved in the memory pool in order to have no gaps of unallocated memory remaining between them. Thus fragmentation of the memory pool may be completely eliminated.

A complete elimination of fragmentation may be useful, in particular in embedded systems, since commands and/or certain software components may be executed more quickly in case there are no gaps of unallocated memory in the memory pool, which may have to skipped during runtime. Apart from that, no fragmentation in a dynamically allocated memory pool may allow memory resources to be used at full capacity, and a client application may maintain a clear control over the used memory resources. Again, this may be particularly useful in embedded systems, where costs of RAM may have an important impact on the cost of a final product. Consequently, reducing and/or controlling the costs for RAM may be important.

According to an embodiment of the invention, moving memory segments comprises: determining a start address of an allocated memory block by adding the size of the specific memory segment to the start address of the specific memory segment, determining a length of the allocated memory block, the length of the allocated memory block being the sum of lengths of the memory segments, which are allocated behind the specific memory segment, and moving the allocated memory block to the start address of the specific memory segment.

Thereby, the allocated memory block may comprise all allocated memory segments in the memory pool having a start address larger than the specific memory segment, which is to be deleted. Moving the allocated block to the start address of the specific memory segment may ensure that the data of the specific memory segment are overwritten with data contained in the memory block, and consequently the specific memory segment may be deleted. Moreover, it may be ensured that no gap in the memory pool may remain by moving the memory block to the start address of the specific memory segment. Consequently, the memory pool consists of a continuously allocated first section and a continuously unallocated second section after the deletion of the specific memory segment.

Apart from summing individual lengths of all memory segments in the allocated memory block, the length of said block may for instance be determined by subtracting the start address and the size of the specific memory segment from a start address of the continuously unallocated section in the memory pool before the deletion of the specific memory segment. For this purpose, the start address of the continuously unallocated section may be stored globally, e.g. as a pointer, or it may also be stored in the translation table.

According to an embodiment of the invention, the translation table comprises entries with an identification key, a start address and a size of an allocated memory segment. In other words, for each allocated memory segment in the memory pool a segment-specific identification key, start address, and size may be stored in an entry of the translation table. Also the translation table may be stored in the memory heap.

The identification may for instance be a running integer number indicating a certain position in the translation table. The start address and the size of a memory segment may be given as multiples of a machine-specific word size in bytes, i.e. for instance as multiples of e.g. an 8, 16, 32, 64-bit word size.

Generally, the translation table may serve as a virtualization mechanism for a software component, wherein identification keys may be provided by the software component, for instance for deleting the specific data segment, instead of an address or an address range in the memory pool. Vice versa, identification keys may be provided to the software component during runtime in order to use data stored in the memory pool.

According to an embodiment of the invention, deleting the specific memory segment further comprises recalculating the start address of each memory segment in the translation table having a start address behind the start address of the specific memory segment.

In order to correctly link an entry in the translation table with a memory segment in the memory pool after moving the allocated memory block to the start address of the specific memory segment, the start address of each allocated memory segment in the memory block may be recalculated. The actual recalculation of the start addresses may for instance be accomplished by subtracting the length of the specific memory segment from the start addresses of each memory segment allocated behind the specific segment.

According to an embodiment of the invention, the translation table comprises a fixed number of entries and each entry comprises a field, whether the entry is used. The fixed size of the translation table may be determined based on a need and a demand of the software component. However, the translation table may also be dynamically extended according to the need and demand of the software component.

A used entry in the translation table may indicate a valid allocation of a memory segment. When a memory segment is deleted, the corresponding field may be set to "unused". The field may for instance be a single bit, which may be set to zero or one according to the status of the respective entry in the translation table. Apart from that, a used entry may comprise a reference to the next used entry in the translation table. This may allow for instance to scan through or search within all used entries in the transition table more quickly, and it may allow to delete a range of allocated memory segments.

According to an embodiment of the invention, deleting the specific memory segment further comprises setting a reference of an used entry in the translation table, which points to an entry of the specific memory segment, to the reference of this entry. In other words, the reference of the first used entry previous to the specific memory segment, i.e. the one having a start address smaller than the specific segment, may be set to the first used memory segment following the specific memory segment.

According to an embodiment of the invention, the method for managing the memory pool further comprises deleting a row of specific memory segments by: receiving identification keys for the specific memory segments, determining the overall size of the specific memory segments from the translation table based on the identification keys, and moving memory segments, which are allocated behind the specific memory segments, towards the beginning of the memory pool by the overall size of the specific memory segments.

The row of specific memory segments may for instance be defined by providing a start identification key of the first memory segment that is to be deleted and an end identification key for the last memory segment that is to be deleted, wherein all memory segments between the start and the end identification key may be deleted. Apart from that, also a list of identification keys for memory segments or a start identification key and an integer number for a number of memory segments which are to be deleted may be provided, e.g. by the software component.

The prescribed possibility of releasing a range of allocated memory may allow to reduce a number of operations required, which may be useful as an optimization but may also be a good way to avoid keeping track of all identification keys associated to allocated memory segments.

Moreover, by manually managing the entire memory pool, all resources in the memory pool may be freed at once, for instance after a termination of a software component, thereby reducing a possibility of memory leaks.

According to an embodiment of the invention, the method for managing the memory pool further comprises requesting a new memory segment by: receiving a length of the new memory segment, setting the start address of the new memory segment to an end of an allocated memory block comprising already allocated memory segments, generating a new identification key for the new memory segment, searching an unused entry in the translation table, marking the entry as used, and storing the new identification key and the start address of the new memory segment in the entry. In other words, in case a new memory segment is requested, e.g. by the software component, in order to store a certain amount of data in the new memory segment, the new memory segment may be arranged subsequent to all previously allocated memory segments, and the characteristics of the new memory segment, i.e. the start address, the size, and the identification key, are stored in an unused entry in the translation table. This may ensure that the entire memory pool consists of a continuously allocated fist section and a continuously unallocated second section, i.e. that there is no fragmentation of the memory pool.

According to an embodiment of the invention, the method of managing the memory pool further comprises requesting an allocated memory segment by: receiving an identification key for the allocated memory segment, and determining the start address from the translation table based on the identification key. For instance the software component may request data stored in an allocated memory segment by providing the identification key to the respective memory segment. In turn, the identification key may be used to search the corresponding entry in the translation table and the corresponding start address of the requested memory segment.

An aspect of the invention relates to a computer program for managing a memory pool, which, when being executed by a processor, is adapted to carry out the steps of the method as described in the above and in the following. The processor may for instance be a processor in an embedded system or in any other computer-based system. The computer program for managing the memory pool may for instance be a stand-alone program interconnected with one or several other computer programs, or it may for instance be implemented as software component in another computer program.

Another aspect of the invention relates to a computer-readable medium, in which such computer program for managing the memory pool is stored. A non-volatile computer-readable medium may be for example a floppy disk, a hard disk, an USB (Universal Serial Bus) storage device, a RAM (Random Access Memory), a ROM (Read Only memory), an EPROM (Erasable Programmable Read Only Memory) or a FLASH memory. A computer readable medium may also be a data communication network, e.g. the Internet, which allows downloading a program code.

These and other aspects of the invention will be apparent from and elucidated with reference to the embodiments described hereinafter.

### Brief description of the drawings

Below, embodiments of the present invention are described in more detail with reference to the attached drawings.
Fig. 1 schematically shows a translation table and its interconnection with a memory pool according to an embodiment of the invention.
Fig. 2 schematically shows the deletion of a specific memory segment in a translation table and a memory pool according to an embodiment of the invention.
Fig. 3 schematically shows the translation table and the memory pool of Fig. 2 after the deletion of a specific memory segment according to an embodiment of the invention.
Fig. 4 shows a flow chart schematically illustrating certain steps of a method for managing a memory pool according to an embodiment of the invention.
Fig. 5 shows a flow chart schematically illustrating certain steps of a method for managing a memory pool according to an embodiment of the invention.
Fig. 6 shows a flow chart schematically illustrating certain steps of a method for managing a memory pool according to another embodiment of the invention.
Fig. 7 shows a flow chart schematically illustrating certain steps of a method for managing a memory pool according to yet another embodiment of the invention.

In principle, identical parts are provided with the same reference symbols in the figures.

### Detailed description of exemplary embodiments

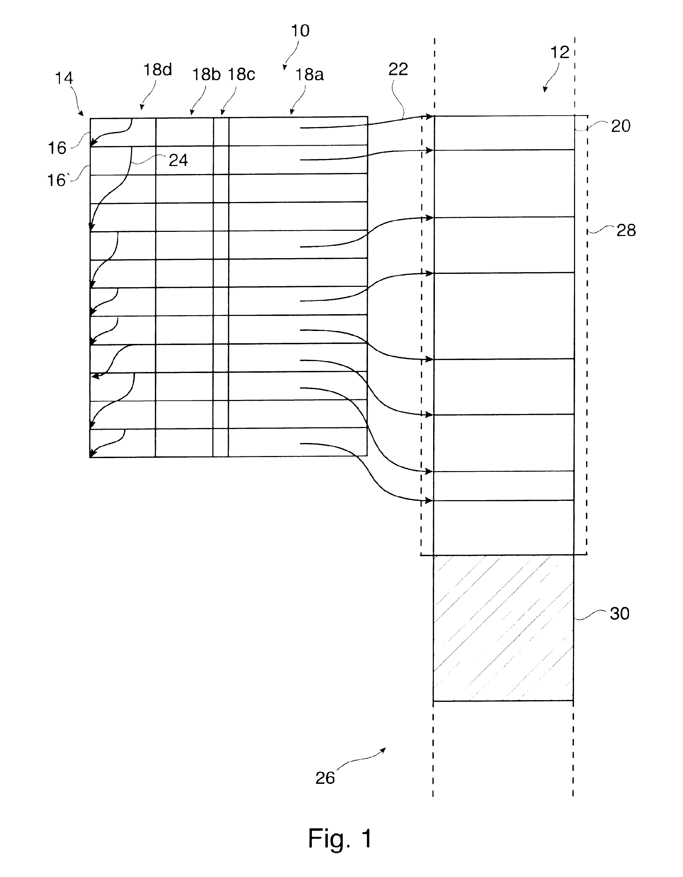

Fig. 1 schematically shows a translation table 10 and its interconnection with a memory pool 12 according to an embodiment of the invention.

The translation table 10 comprises a fixed number of entries 14, each of which may be referenced with an identification key 16, 16'. An identification key 16, 16' may in this context be understood as a position or row in the translation table 10 or a running integer number.

For example, certain identification keys 16 are associated with an allocated memory segment 20 in the memory pool 12, respectively, and other identification keys 16' are not associated with the memory pool 12. The unassociated identification keys 16' may thus be regarded as free.

For each identification key 16, which is associated with an allocated memory segment 20, the translation table 10 comprises a field 18a with a reference 22 to a start address and a field 18b with a size of the allocated memory segment 20. The start address and the size of each allocated memory segment may for this purpose be stored in the fields 18a, 18b of the translation table 10 as multiples of a machine-specific word size in bytes. The start address may for example also be stored as a pointer to the respective address in the memory pool 12.

Apart from entries 18a, 18b for the start address and the size of an allocated memory segment 20, the translation table 10 comprises a field 18c for each entry 14, indicating that the corresponding entry 14 is used, i.e. that the identification key is associated with an allocated memory segment 20. The field 18c may for this purpose comprise a single bit, which may be set to zero or one.

On the other hand, for each entry 14, which is not associated with an allocated memory segment 20, the field 18c is set to "unused", thereby signaling that the corresponding entry 14 is free. For this purpose the single bit stored in field 18c may be set to a binary value opposing the value used for indicating a "used" entry 14.

Furthermore, for each entry 14 the translation table 10 comprises a field 18d with a reference or link 24 to the next used entry 14 in the translation table 10. For instance the next used identification key 16 or a number of entries between two consecutive used entries 14 may be stored in the field 18d.

In general, the translation table 10 may be regarded as a table comprising a fixed number of entries or elements, each of which may be associated with and identified by an identification key. Each element in this context may comprise fields 18a, 18b, 18c, 18d.

According to the used identification keys 16 in the translation table 10, the memory pool 12, which may comprise a part of or an entire memory heap 26, is partitioned into consecutive memory segments 20 of variable size and with increasing start addresses in the memory heap 26.

The entire memory pool 12 thereby consists of a first section 28, which is continuously allocated by consecutively allocated memory segments 20, and a second section 30, which is continuously unallocated, i.e. the section 30 entirely consists of free memory.

For a comprehensive memory management, a start address of the continuously unallocated section 30 may stored globally or may be stored in the translation table 10, e.g. by a pointer.

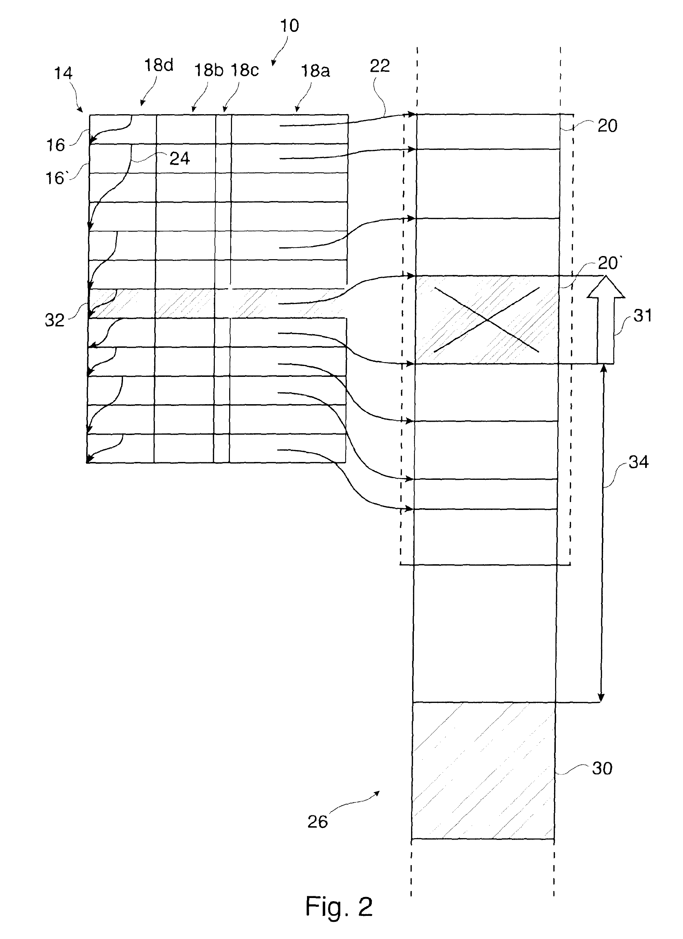

Fig. 2 schematically shows the deletion of a specific memory segment 20' associated with an identification key 32 in the translation table 10 and the memory pool 12 according to an embodiment of the invention.

For the actual deletion of the specific memory segment 20', a memory block 34 comprising all memory segments 20, which are allocated behind the start address of the specific memory segment 20' in the memory pool 12 or the memory heap 26, are moved towards the beginning of the memory heap 26 by the size of the specific memory segment 20', which is indicated by an arrow 31 in Fig. 2.

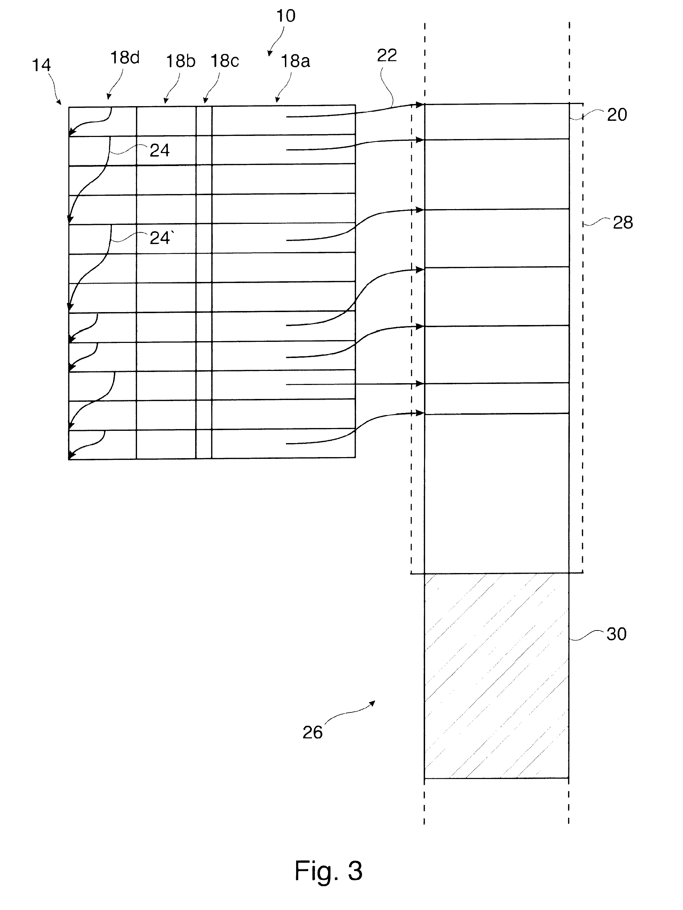

Fig. 3 schematically shows the translation table 10 and the memory pool 12 of Fig. 2 after the deletion of the specific memory segment 20' according to an embodiment of the invention.

After the deletion of the specific memory segment 20', the memory pool 12 again comprises a first section 28, which is continuously allocated, and a second section 30, which is continuously unallocated. The second section 30 is increased by the size of the deleted memory segment 20' after its deletion, and the start address of the second section may be stored.

The identification key 32 of the deleted memory segment 20' is marked as "unused" by setting the corresponding value in the field 18c of the translation table 10.

Apart from that, the value in the field 18d of the first used identification key previous to the identification key 32 of the deleted memory segment 20' is re-referenced to the next used identification key in the translation table 10, which may be the identification key the deleted memory segment 20' was referenced to before its deletion.

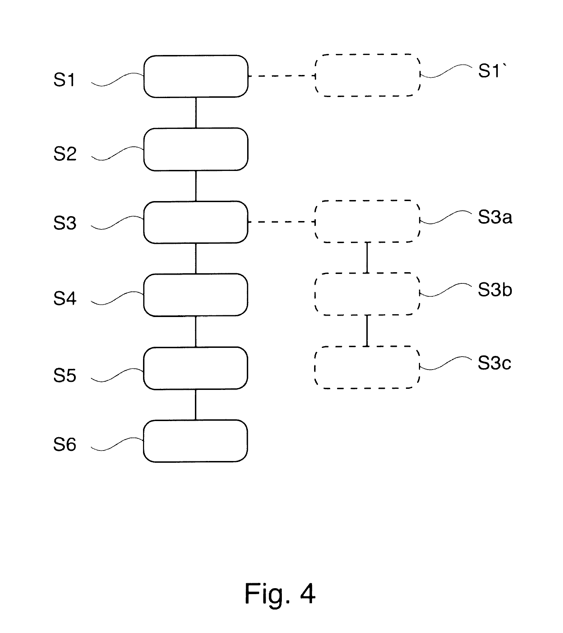

Fig. 4 shows a flow chart schematically illustrating steps of a method for managing a memory pool 12. Therein the steps relate to a deletion of a specific memory segment 20' in the memory pool 12 of the memory heap 26, i.e. a release of data allocated in the specific memory segment 20'. A state of the translation table 10 as well as of the memory pool 12 corresponding to the deletion of the memory segment 20' are schematically shown in Figs. 1 to 3.

In a step S1 an identification key 32 for the specific data segment 20', which is to be deleted, is received. The identification key may for example be provided by a software component upon terminating a process.

After receiving the identification key 32 it may optionally be checked in a step S1', whether the identification key 32 is marked as used in the field 18c of the translation table 10 associated with the identification key 32.

In a step S2 a start address and a size of the specific memory segment 20' is determined from entries of the fields 18a, 18b associated with the identification key 32 in the translation table 10.

In a step S3, memory segments 20, which are allocated behind the start address of the specific memory segment 20' in the memory pool 12 or the memory heap 26, are moved towards the beginning of the memory heap 26 by the size of the specific memory segment 20'.

In this context, the entire memory pool 12 is compacted such that the memory pool 12 consists of a first section 28, which is continuously allocated, and a second section 30, which is continuously unallocated.

The actual compaction of the memory pool 12 may be accomplished by moving allocated segments 20 in step S3. For this purpose, a start address of an allocated memory block 34 may be determined in a step S3a by adding the size of the specific memory segment 20' to the start address of the specific memory segment 20'. The allocated memory block thus starts with the next used memory segment 20 in the memory pool 12.

In a step S3b a length of the allocated memory block 34 may be determined, the length of the allocated memory block 34 being the sum of lengths of the memory segments 20, which are allocated behind the specific memory segment 20'. Additionally there is another easier method to calculate the length of the memory block 34, that is by subtracting the start address of the memory segment from the first id to remove from the globally known start of the unallocated memory.

In a step S3c the allocated memory block 34 is finally moved to the start address of the specific memory segment 20.

Step S3c may thus be regarded as a single memory copying, wherein a source of the copying may be the start address of the allocated memory block 34, a destination may be the start address of the specific memory segment 20', and the length of the allocated memory block 34 may be the length of the used memory pool 12 above the specific memory segment 20'. The prescribed memory copying may for instance be accomplished in a single operation by using system commands, such as e.g. 'memcpy' that is supported on most platforms at machine code level.

In a step S4 the start address of each memory segment 20 in the translation table 10 having a start address behind the start address of the specific memory segment 20' is recalculated. In other words, for each used identification key 16 associated with memory segments 20, which are allocated after the specific memory segment 20' in the memory pool 12, i.e. which have a start address larger than the start address of the specific memory segment 20', the start address stored in the corresponding field 18a of the translation table 10 is recalculated.

For this purpose, the entire or parts of the translation table 10 may be looped and for each used identification key 16 it may be checked whether the respective memory segment is allocated after the specific segment 20'. If so, the length of the specific memory segment 20' may be subtracted from each start address of memory segments 20 allocated behind the memory segment 20', and the recalculated start addresses may be stored in the corresponding field 18a of the translation table 10.

In a step S5 the identification key 32 of the deleted specific memory segment 20' may be marked as unused in the translation table by setting a corresponding flag in the field 18c associated with identification key 32.

In a step S6, a reference of an used entry in field 18d of the translation table 10, which points to the identification key 32 of the specific memory segment 20', is set to the reference of this entry. In other words, the links between remaining elements in the translation table 10 after the deletion of memory segment 20' may be restored, such that the element which had an entry in field 18d that was pointing to the identification key 32 of the removed memory segment 20' is now pointing to the next used identification key 16 (or contains -1 or "unused" if the removed specific memory segment 20' was the last one in the translation table 10).

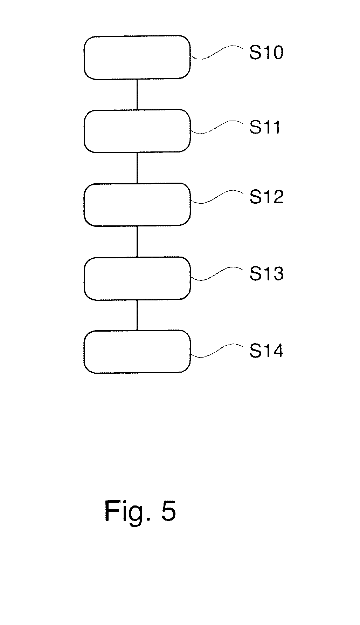

Fig. 5 shows a flow chart schematically illustrating certain steps of a method for managing a memory pool. Therein the steps relate to a deletion of more than one specific memory segments 20' in the memory pool 12 of the memory heap 26.

In a step S10 identification keys 16 for the specific memory segments 20' are received, wherein the identification keys 16 may be a start identification key and an end identification key.

In a step S11 the overall size of the specific memory segments 20' is determined from the translation table 10 based on the identification keys 16.

The overall size may be determined by looping the translation table starting from the start identification key as current. For each identification key 16 following the start identification key, the overall size of memory to be removed may be calculated by adding the size of the current element in the translation table 10 to the size of the element with the start identification key. The current element in the translation table 10 may be marked as unused by setting the flag in the corresponding field 18c, and the field 18d of the current element may provide the identification key for the next current element in the row of specific memory segments 20' which are to be deleted.

In a step S12 the start address of each memory segment 20 in the translation table 10 having a start address behind the end identification key of the specific memory segments 20' is recalculated.

For this purpose, the entire or parts of the translation table 10 may be looped and for each used identification key 16 it may be checked whether the respective memory segment is allocated after the row of specific segments 20'. If so, the overall size of the specific memory segments 20' determined in step S11 may be subtracted from each start address of memory segments 20 allocated behind the memory segment 20', and the recalculated start addresses may be stored in the corresponding field 18a of the translation table 10.

In a step S13 the memory segments 20, which are allocated behind the specific memory segments 20', are moved towards the beginning of the memory heap 26 by the overall size of the specific memory segments 20' determined in step S11. Similar to step S3 in Fig.4, the memory pool 12 is compacted in step S13 by a single copying of memory, wherein the source for the copying may be given by the next used identification key 16 following the end key, the size may be given by the overall size determined in step S11, and the destination may be given by the start address of the element in the translation key associated with the start identification key.

In a step S14, a reference of an used entry in field 18d of the translation table 10, which points to the element associated with the start identification key, is set to the reference in the field 18d of the element associated with the end identification key (or to -1 or "unused" if the end key was last in the translation table 10).

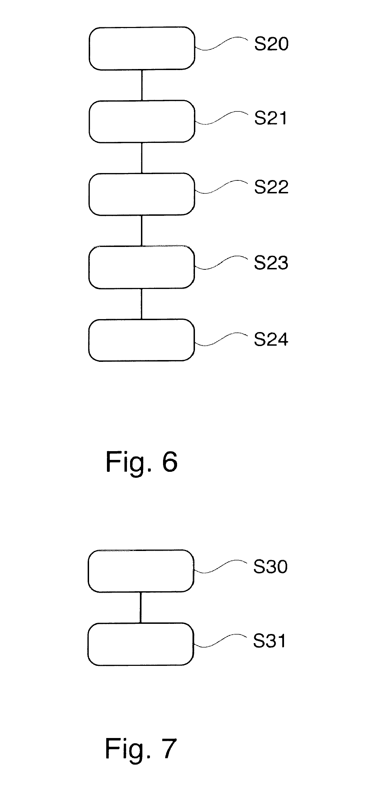

Fig. 6 shows a flow chart schematically illustrating certain steps of a method for managing a memory pool 12. Therein the steps relate to requesting a new memory segment and allocating data in the new memory segment.

In a first step S20 a length of the new memory segment is received. Additionally, an aligned size of the new memory segment may be calculated by rounding up the length to the machine word of the system in order to prevent any misalignment in the memory pool 12.

After receiving the length of the new memory segment it may be checked whether there are enough resources available to carry out the allocation. This may be done by checking if there is enough free space in the memory pool 12 and if there is at least one unused identification key 16' in the translation table 10. If the conditions are not met, -1 may be returned indicating that an error occurred and the allocation may be exited.

In a step S21 an unused entry with an unused identification 16' is searched in the translation table 10. To optimize this procedure, the translation table 10 may be looped starting from the last used identification key 16 and the nearest unused identification key 16' may be located. The search through the translation table 10 may restart at the beginning if the end of the translation table 10 is reached. If no unused identification key 16' is available, the translation table 10 may also be dynamically extended and a new identification key may be generated.

In a step S22 the start address of the new memory segment is set to an end of an allocated memory block 28 comprising already allocated memory segments 20. In other words, the start address of the new segment is set to the beginning of the continuously unallocated section 30 of the memory pool 12.

The start address of the continuously unallocated section 30 may be globally known e.g. by storing a pointer or it may be determined by adding the length of the memory segment 20 associated with the last used identification key 16 to the corresponding start address.

In a step S23 the entry in field 18c related to the identification key found in step S21 is marked as used, i.e. the used flag may be set.

In a step S24 the data may be copied to the new memory segment in the memory pool 12 and the value of the start address of the continuously unallocated section 30 may be recalculated by adding the aligned size of the data determined in step S20.

Apart from that, the start address of the new segment and the aligned size may be stored in fields 18a, 18b of the translation table 10, which are associated with the identification key found in step S21.

Additionally, a number of used identification keys 16, which may be globally known, may be incremented by one, and the identification key found in step S21 which is associated with the new memory segment may be returned e.g. to a client application to further refer this piece of data in operations.

If necessary (i.e. if the identification key used for the new memory segment is not the first or last element in the translation table) a link between the identification key of the new memory segment and a used identification key previous to it and/or with a used identification directly following it may be set in the corresponding fields 18d of the translation table 10.

Fig. 7 shows a flow chart schematically illustrating certain steps of a method for managing a memory pool. Therein the steps relate to requesting an allocated memory segment 20.

In a step S30 an identification key 16 for the allocated memory segment 20 is received (e.g. by a software component).

It is important that the client software has no direct access to this memory, and it is not intended to keep global references to the memory to avoid memory corruption because the memory content might be moved due to a deletion of a previously allocated segment. Only the memory manager has access to this data and on request the data will be copied out from there to the software client but can't be accessed directly.

In a step S31 the start address of the memory segment 20 is determined from the translation table 10 based on the identification key 16, and the data stored in the memory segment 20 may be accessed e.g. by a software component.

The method may be implemented as programmed software modules or procedures, respectively; however, one skilled in the art will understand that the method may be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for managing a memory pool (12) in a memory heap (26) partitioned into consecutive memory segments (20), the method comprising deleting a specific memory segment (20') by:
receiving an identification key (32) for the specific memory segment (20');
determining a start address and a size of the specific memory segment (20') from a translation table (10) based on the identification key (32); and
moving memory segments (20), which are allocated behind the start address of the specific memory segment (20') in the memory pool (12), towards the beginning of the memory pool (12) by the size of the specific memory segment (20'), such that the memory pool (12) consists of a first section (28), which is continuously allocated, and a second section (30), which is continuously unallocated.

2. The method according to claim 1,
wherein moving memory segments (20') comprises:
determining a start address of an allocated memory block (34) by adding the size of the specific memory segment (20') to the start address of the specific memory segment (20);
determining a length of the allocated memory block (34), the length of the allocated memory block (34) being the sum of lengths of the memory segments (20), which are allocated behind the specific memory segment (20'); and
moving the allocated memory block (34) to the start address of the specific memory segment (20').

3. The method of claim 1 or 2,
wherein the translation table (10) comprises entries (18a, 18b) with an identification key (16, 16'), a start address and a size of an allocated memory segment (20).

4. The method according to one of the preceding claims,
wherein deleting the specific memory segment (20') further comprises:
recalculating the start address of each memory segment (20) in the translation table (10) having a start address behind the start address of the specific memory segment (20').

5. The method according to one of the preceding claims,
wherein the translation table (10) comprises a fixed number of entries and each entry comprises a field (18c), whether the entry is used,
wherein a used entry comprises a reference (24) to the next used entry in the translation table (10).

6. The method according to one of the preceding claims, wherein deleting the specific memory segment (20') further comprises:
setting a reference (24) of an used entry in the translation table (10), which points to an entry of the specific memory segment (20'), to the reference of this entry.

7. The method according to one of the preceding claims, further comprising deleting a row of specific memory segments by:
receiving identification keys for the specific memory segments (20');
determining the overall size of the specific memory segments (20') from the translation table (10) based on the identification keys; and
moving memory segments (20), which are allocated behind the specific memory segments (20'), towards the beginning of the memory pool (12) by the overall size of the specific memory segments (20').

8. The method according to one of the preceding claims, further comprising requesting a new memory segment by:
receiving a length of the new memory segment;
setting the start address of the new memory segment to an end of an allocated memory block comprising already allocated memory segments;
searching an unused entry in the translation table (10);
generating a new identification key for the new memory segment;marking the entry as used and storing the new identification key and the start address of the new memory segment in the entry.

9. The method according to one of the preceding claims, further comprising requesting an allocated memory segment (20) by:
receiving an identification key (16) for the allocated memory segment (20); and
determining the start address from the translation table (10) based on the identification key (16).

10. A computer program for managing a memory pool, which, when being executed by a processor, is adapted to carry out the steps of the method of one of claims 1 to 9.

11. A computer-readable medium, in which a computer program according to claim 10 is stored.
